# FASCICULE DE BREVET EUROPEEN

(11) **EP 2 456 805 B1**
(45) Date de publication et mention de la délivrance du brevet: **21.08.2013**
(21) Numéro de dépôt: 10752004.1
(22) Date de dépôt: 13.07.2010
(51) Int. Cl.: C08G 59/66, C09J 163/02

(54) **SYSTÈME ADHÉSIF BICOMPOSANT ÉPOXY À TEMPS OUVERT AMÉLIORÉ**
ZWEI-KOMPONENTEN-EPOXYKLEBSTOFF MIT VERBESSERTER OFFENER ZEIT
TWO PART EPOXY ADHESIVE WITH IMPROVED OPEN TIME

(30) Priorité: 22.07.2009 FR 0903608
(43) Date de publication de la demande: 30.05.2012
(73) Titulaire: Bostik SA, 92400 Courbevoie (FR)
(72) Inventeur: NERY, Laurent, 93160 Noisy Le Grand (FR); GUERINEAU, Quentin, 77720 Mormant (FR)
(74) Mandataire: Granet, Pierre
(86) Numéro de dépôt international: PCT/FR2010/051472
(87) Numéro de publication internationale: WO 2011/010047

(56) Documents cités:
- FR-A- 1 448 492
- JP-A- 2008 088 212
- JP-A- 2008 260 850
- US-A1- 2005 032 938
- DATABASE WPI Week 200660 Thomson Scientific, London, GB; AN 2006-581610 XP002564529, & JP 2006 206642 A (MATSUSHITA ELECTRIC WORKS LTD) 10 août 2006 (2006-08-10)

## Description

La présente invention a pour objet un système adhésif bicomposant époxy comprenant une composition (A) à base de résine époxy et une composition (B) à base d'un polymercaptan en tant qu'agent de réticulation de ladite résine. Elle concerne également l'utilisation dudit système comme colle de fixation ou de réparation.

Des systèmes adhésifs bicomposants à base de résine époxy et de polymercaptans sont largement disponibles dans le commerce, notamment dans les grandes surfaces de bricolage. Ces systèmes peuvent être utilisés pour les opérations les plus variées de fixation ou de réparation à l'intérieur ou à l'extérieur des habitations. On peut citer par exemple la fixation de divers éléments de décoration sur les murs (patères, tringles, porte-serviettes), l'assemblage d'éléments de plomberie, le colmatage de fissures dans les tuyauteries. On peut citer également la réparation d'objets brisés comprenant le colmatage d'entailles ou de brèches plus ou moins profondes à la surface par exemple de meubles, d'appareils électroménagers, d'outils, ou encore dans les domaines nautique (coques de bateaux) ou automobile (colmatage de fuites dans le réservoir de carburant ou le radiateur, de fissures dans le pot d'échappement...).

De tels systèmes sont souvent conditionnés et commercialisés sous la forme d'un bâtonnet ou cylindre droit, lequel est constitué :
- d'un premier cylindre droit intérieur constitué de la composition (B) comprenant le polymercaptan, un catalyseur de réticulation, ainsi que des charges inertes, et
- d'un second cylindre droit extérieur concentrique et au contact du premier, constitué de la composition (A) comprenant la résine époxy et les charges inertes.

De tels bâtonnets sont avantageusement obtenus par coextrusion des compositions (A) et (B), lesquelles se présentent généralement sous forme de pâtes de consistance plus ou moins grande.

La section de ces cylindres est variable, dépendant de la technique de coextrusion utilisée ; le cylindre extérieur est généralement de section circulaire, et le cylindre intérieur de section circulaire ou polygonale, par exemple triangulaire.

En vue de l'opération de fixation, assemblage ou réparation à réaliser, l'utilisateur :
- découpe dans le bâtonnet une portion ayant une longueur correspondant à la quantité souhaitée, généralement comprise entre 5 et 50 g, puis
- procède à un mélange homogène des 2 compositions (A) et (B) par simple malaxage manuel durant environ 1 à 2 minutes. La composition ainsi obtenue est alors mise en oeuvre immédiatement, par dépôt sur le ou les substrats à assembler ou à réparer, sans attendre son échauffement qui correspond au déroulement de la réaction chimique de réticulation entre la résine époxy et le polymercaptan.

Cette réaction de réticulation a pour effet, une fois terminée, de former dans le mélange de (A) et (B) un polymère thermodurcissable de structure tridimensionnelle. Le mélange formant le joint adhésif -qui, selon les cas, unit les substrats à assembler ou colmate la brèche du substrat à réparer- possède ainsi d'excellentes propriétés mécaniques qui lui permettent si nécessaire d'être percé ou taraudé, sa forme ne pouvant éventuellement être qu' ajustée par limage.

La demande de brevet US 2005/0032938 décrit un tel système adhésif bicomposant époxy dans lequel la composition (A) comprend, comme résine époxy, un bisphénol A standard et la composition (B) comprend, en tant que durcisseur, un polyéther polymercaptan combiné avec un tris(diméthylaminométhyl)phénol comme catalyseur de réticulation. Le temps de réticulation donné pour ce système est d'environ 10 minutes.

Un tel temps de réticulation conduit toutefois à des temps ouverts très insuffisants pour certains usages de ces systèmes adhésifs. On entend par temps ouvert la durée qui sépare le moment où l'on mélange par malaxage manuel les compositions (A) et (B) du moment où ledit mélange réticule à un degré tel qu'il n'est plus possible de le mettre en forme par façonnage. Le temps ouvert est généralement très inférieur au temps de réticulation qui correspond à l'achèvement complet de la réaction chimique de réticulation.

Or, il est bien des situations pratiques pour lesquelles un tel façonnage est souhaité lors de la mise en oeuvre du système adhésif comme colle de réparation. On peut en donner comme exemple le colmatage des brèches ou entailles à la surface d'objets en bois, céramique, plastiques rigides (à l'exception des plastiques à faible énergie de surface), métal, verre, plâtre ou ciment. On peut citer comme exemples d'objets susceptibles d'être réparés : un meuble, un panneau, un nez de marche ou encore un élément de carrosserie. On attend de la colle de réparation qu'elle occupe complètement l'espace vide créé à la surface de l'objet endommagé, tout en épousant au mieux sa forme, dans un but esthétique. Ceci nécessite donc de la part de l'utilisateur un travail de façonnage qui implique une certaine durée et ne peut s'effectuer commodément, en raison du temps ouvert insuffisant du système adhésif bicomposant époxy décrit par l'US 2005/0032938.

La présente invention a pour but de remédier à cet inconvénient de l'art antérieur, tout en offrant des performances mécaniques comparables pour le mélange de (A) et de (B) obtenu après réticulation et formant le joint adhésif.

Un autre but de la présente invention est d'offrir un système adhésif bicomposant époxy utilisable comme colle de réparation dont le temps ouvert soit supérieur ou égal à 10 minutes, et conférant au mélange de (A) et de (B) obtenu après réticulation une dureté comparable à celle présentée par les systèmes adhésifs bicomposants époxy de l'art antérieur.

Un autre but de la présente invention est d'offrir un système adhésif bicomposant époxy utilisable comme colle de réparation dont le temps ouvert soit supérieur ou égal à 10 minutes et puisse être également ramené, selon le choix de l'utilisateur et de façon très simple, à moins d'un quart d'heure, de préférence à moins de 5 minutes, tout en maintenant à un excellent niveau les performances mécaniques du mélange de (A) et de (B) obtenu après réticulation, et notamment sa dureté.

Il a à présent été trouvé que ces buts peuvent être atteints en totalité ou en partie au moyen du système adhésif bicomposant et de son utilisation, dont la description est donnée ci-après.

La présente invention a donc pour objet en premier lieu un système adhésif bicomposant époxy caractérisé en ce qu'il comprend :
- une composition (A) comprenant :
   - de 15 à 50 % d'une résine époxy réticulable de type bisphénol A,
   - de 0,5 à 40 % d'un oxyde ou hydroxyde d'un métal alcalino-terreux sous la forme de particules de taille comprise entre environ 1 et 50 µm, et
   - de 30 à 80 % d'une ou plusieurs charges inertes, minérales ou organiques ; et
- une composition (B) comprenant :
   - de 15 à 50 % d'un mélange de polymercaptans consistant de :
      - 0 à 100 % d'un polymercaptan B1 obtenu par estérification de l'acide mercaptoacétique ou mercaptopropionique avec un polyol comprenant de 3 à 6 atomes de carbone ; et
      - 0 à 100 % d'un polymercaptan B2 obtenu par action du sulfure d'hydrogène sur un polyglycidyl éther de polyoxyalkylène, et
   - de 50 à 85 % d'une ou plusieurs charges inertes, minérales ou organiques ;
   le rapport poids de composition (A)/ poids de composition (B) dudit système étant tel que le ratio nombre de moles de groupes époxy/nombre de moles de groupes mercaptan est compris entre 0,95 et 2,5.

En l'absence d'indications contraires, les pourcentages utilisés dans le présent texte pour exprimer les quantités d'ingrédients des compositions (A) et (B) correspondent à des pourcentages poids/poids.

### Composition (A) :

Les résines époxy réticulables de type bisphénol A sont définies, au sens de la présente invention, comme les composés comprenant 2 groupes époxy et susceptibles d'être obtenus par réaction de haloépoxydes tels que l'épichlorhydrine (également dénommée 2-(chloromethyl)oxirane) ou la β-méthyl-épichlorhydrine avec le bisphénol A, le bisphénol AD ou le bisphénol F.

Le bisphénol A (ou 2,2-bis(4-hydroxyphényl) propane) a pour formule :

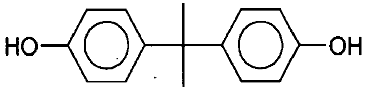

Le bisphénol AD (ou 1,1-bis(4-hydroxyphényl)-éthane) a pour formule :

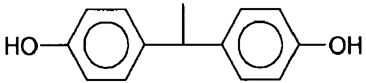

Le bisphénol F (bis(4-hydroxyphényl) méthane) a pour formule :

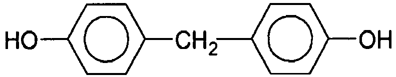

On préfère utiliser comme résine époxy réticulable de type bisphénol A le diglycidyl éther de bisphenol A (également connu sous le sigle DGEBA), de formule :

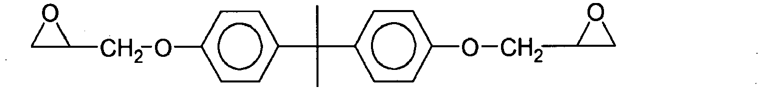

Ce dernier composé est disponible dans le commerce, par exemple sous la dénomination de D.E.R.™ 331™ auprès de la société Dow.

Le métal alcalino-terreux dont l'oxyde ou l'hydroxyde est compris dans la composition (A) est avantageusement choisi parmi le calcium, le barium et le strontium.

Selon un mode de réalisation préféré de l'invention, on utilise de l'hydroxyde de calcium.

Selon un autre mode de réalisation, on utilise de l'oxyde de calcium. Dans ce cas, ledit oxyde est avantageusement incorporé dans la composition (A) sous la forme d'une composition comprenant environ de 60 à 70 % d'oxyde de calcium, 15 à 25 % de silice et 2 à 10 % d'oxyde ferrique Fc₂O₃. Cette composition est souvent désignée sous le terme de ciment Portland et est largement disponible dans le commerce.

Les charges inertes minérales ou organiques utilisables sont sous forme pulvérulente et sont par exemple choisies parmi les carbonates (carbonate de calcium), les silicates de sodium, potassium et aluminium, les silicates de magnésium éventuellement hydratés (talc), le quartz, la silice, les métaux et leurs oxydes, la cellulose ou la poudre (ou farine) de bois. Ces charges sont généralement sous forme de particules de taille comprise entre environ 1 et 50 µm.

De préférence, la composition (A) comprend de 25 à 40 % de la résine époxy réticulable de type bisphénol A, de 0,5 à 35 % de l'oxyde ou hydroxyde de métal alcalino-terreux, et de 35 à 75 % de charges inertes minérales.

### Composition (B) :

Le mélange de polymercaptans mis en oeuvre comprend de préférence comme composé B1 le pentaerythritol tetra(3-mercaptopropionate), également désigné sous le sigle de PETMP, et comme composé B2 un dérivé polymercaptan d'un polyglycidyl éther de polyoxypropyléne.

Le composé B1 est disponible commercialement, par exemple sous la dénomination Thiocure^{®} PETMP auprès de la société Bruno BOCK.

Le dérivé B2 est également disponible dans le commerce, par exemple sous la dénomination de CAPCURE^{®} 3-800 commercialisé par la société COGNIS.

Selon une variante de réalisation, le mélange de polymercaptans mis en oeuvre comprend de 50 à 100 % de B1 et de 0 à 50 % de B2.

Les charges inertes minérales ou organiques utilisables sont les mêmes que celles qui peuvent être mises en oeuvre pour la composition (A).

Selon une autre variante préférée, la composition (B) comprend :
- de 20 à 40 % du mélange de polymercaptans, et
- de 60 à 80 % de charges minérales.

Les compositions (A) et (B) sont préparées par simple mélange de leurs ingrédients et se présentent sous la forme de pâtes de consistance plus ou moins grande.

Selon une variante préférée de l'invention, la quantité de système adhésif bicomposant époxy, exprimée en poids total des compositions (A) et (B), est comprise entre 2 et 60 g, de préférence entre 5 et 50 g. Cette quantité est avantageusement adaptée à un malaxage manuel nécessaire à la mise en oeuvre.

Selon une première forme de réalisation, les compositions (A) et (B) du système adhésif selon l'invention sont conditionnées de façon séparée, telles que obtenues par mélange de leurs ingrédients, sous la forme de pâtes.

Selon une autre forme de réalisation, le système adhésif bicomposant est conditionné en un bâtonnet ayant la forme d'un cylindre droit comprenant :
- un cylindre droit intérieur constitué de la composition (B) et
- un cylindre droit extérieur constitué de la composition (A), concentrique et au contact du cylindre intérieur.

Ledit bâtonnet peut être obtenu par co-extrusion des compositions (A) et (B).

La section du cylindre droit intérieur peut être de diverse forme, par exemple circulaire ou polygonale, notamment triangulaire. La section du cylindre droit extérieur est également de forme appropriée, généralement limitée extérieurement par un cercle.

La longueur dudit bâtonnet est par exemple comprise entre 0,5 et 15 cm, de préférence entre 1 et 10 cm. Dans le cas où l'enveloppe de la section du bâtonnet est circulaire, le diamètre de ce cercle peut aller de 0,8 à 2,5 cm, de préférence de 1 à 2 cm.

La présente invention concerne également une utilisation du système adhésif bicomposant époxy tel que défini précédemment comme colle de fixation ou de réparation, comprenant :
- le prélèvement d'une partie dudit système correspondant à un poids total des compositions (A) et (B) allant de 2 à 60 g, de préférence de 5 à 50 g, puis
- le malaxage manuel desdites compositions (A) et (B) jusqu'à obtention d'un mélange homogène, durant un temps allant généralement de 30 secondes à 2 minutes, puis
- l'application immédiate dudit mélange à sec sur le ou les substrats à assembler ou à réparer.

Cette première utilisation conduit avantageusement à un système adhésif ayant un temps ouvert supérieur ou égal à 10 minutes. Cela permet à l'utilisateur, lorsqu'il désire colmater une entaille ou une brèche formée à la surface d'un objet endommagé, d'avoir le temps nécessaire à la mise en forme de la masse adhésive par façonnage à la main, avec un outil, ou éventuellement avec un moule, de manière à avoir une réparation satisfaisante au plan esthétique. L'opération de colmatage peut ainsi inclure des ajustements ou reprises dudit façonnage, avant la solidification complète de la masse adhésive résultant de l'achèvement de la réaction de réticulation. Ce temps ouvert supérieur ou égal à 10 minutes est particulièrement appréciable dans le cas d'objets dont la surface endommagée a une forme complexe, comme par exemple un pied de chaise.

La présente invention concerne également une utilisation du système adhésif bicomposant époxy tel que défini précédemment comme colle de fixation ou de réparation, comprenant :
- le prélèvement d'une partie dudit système correspondant à un poids total des compositions (A) et (B) allant de 2 à 60 g, de préférence de 5 à 50 g, puis
- le malaxage manuel desdites compositions (A) et (B) jusqu'à obtention d'un mélange homogène, durant un temps allant généralement de 30 secondes à 2 minutes, puis
- l'incorporation d'eau dans ledit mélange à raison d'une quantité comprise entre 0,05 et 2,5 %, de préférence entre 0,1 et 1 %, suivie d'une ré-homogénéisation, puis
- l'application immédiate du mélange obtenu sur le ou les substrats à assembler ou à réparer.

Dans les conditions pratiques d'utilisation, l'incorporation d'eau peut se faire très simplement par un bref passage de la masse homogène résultant du mélange des compositions (A) et (B) sous le jet d'eau d'un robinet. On obtient alors un temps ouvert inférieur à un quart d'heure, et même souvent inférieur à 5 minutes, ce qui est très utile pour des applications pour lesquelles une prise rapide est désirée, qu'il s'agisse par exemple de fixation d'objets sur le mur ou de réparation (colmatage d'une fissure occasionnant une fuite dans un tuyau).

Pour les 2 utilisations selon l'invention, on obtient après réticulation de la masse homogène résultant du mélange des compositions (A) et (B) un joint adhésif comprenant un polymère thermodurcissable de structure tridimensionnelle, dont les performances mécaniques, et notamment la dureté, sont tout à fait excellentes.

Lorsque le système adhésif bicomposant époxy selon l'invention est conditionné en bâtonnet en forme de cylindre droit, le prélèvement de la partie dudit système désirée par l'utilisateur en vue de l'une des 2 utilisations précédentes se fait par simple découpe perpendiculairement à la longueur, correspondant à la quantité totale à appliquer. L'utilisateur dispose ainsi commodément des poids de compositions (A) et (B) dans le ratio tel que défini dans ledit système adhésif et nécessaire à la réticulation du mélange.

Les exemples suivants sont donnés à titre purement illustratif de l'invention et ne sauraient être interprétés pour en limiter la portée.

### Exemple 1 :

Les compositions (A) et (B) sont préparées par mélange des ingrédients indiqués avec leur teneur dans le tableau suivant et obtenues sous la forme de pâtes.

La DGEBA est le le diglycidyl éther de bisphenol A dont la teneur en groupe époxy est d'environ 5250 mmol/kg.

Le PETMP a une teneur en groupe -SH de 8190 mmol/kg.

Les charges inertes mises en oeuvre sont un mélange de silicate de magnésium hydraté et de carbonate de calcium en quantités sensiblement égales.

### Test du temps ouvert à sec :

On prélève des quantités de compositions (A) et (B) dans les proportions en poids indiquées dans le tableau, et correspondant à un poids total (A) + (B) de 30 g. Ces poids de compositions (A) et (B) sont soumis à un malaxage manuel durant environ 1 minute, jusqu'à obtention d'un mélange pâteux homogène. Le mélange obtenu est alors mis sous la forme approximative d'une sphère.

Cette sphère est re-malaxée manuellement toutes les heures pour en évaluer la consistance.

Le temps ouvert à sec correspond à la durée, exprimée en heures, au bout de laquelle la pâte est trop épaisse pour permettre la mise en forme du mélange en une forme complexe.

Le résultat est indiqué dans le tableau suivant.

### Test du temps ouvert sous eau :

On prélève des quantités de compositions (A) et (B) dans les proportions en poids indiquées dans le tableau, et correspondant à un poids total (A) + (B) de 30 g. Ces poids de compositions (A) et (B) sont soumis à un premier malaxage manuel durant environ 1 minute, jusqu'à obtention d'un mélange pâteux homogène. Le mélange obtenu est mis sous la forme approximative d'une sphère.

Cette sphère est alors passée rapidement sous un filet d'eau du robinet, et brièvement égouttée d'un revers de la main, de manière à incorporer une quantité d'eau d'environ 0,5 %. Un deuxième malaxage manuel, durant environ 30 secondes, est effectué, de manière à obtenir une pâte d'aspect homogène qui est de nouveau mise en forme de sphère.

Celle-ci est alors re-malaxée toutes les minutes pour en évaluer la consistance.

Le temps ouvert sous eau correspond à la durée, comptée à partir du 2^{ème} malaxage manuel et exprimée en minutes, au bout de laquelle la pâte est trop épaisse pour permettre la réalisation de formes complexes.

Le résultat est indiqué dans le tableau suivant.

### Test de la Dureté SHORE du produit réticulé (à sec et sous eau) :

On prélève des quantités de compositions (A) et (B) dans les proportions en poids indiquées dans le tableau, et correspondant à un poids total (A) + (B) de 30 g. Ces poids de (A) et (B) sont soumis à un malaxage manuel durant environ 1 minute, jusqu'à obtention d'un mélange pâteux homogène dans lequel est, le cas échéant, incorporé de l'eau selon les modalités décrites dans le test de temps ouvert sous eau.

Le mélange obtenu est appliqué au doigt sur une feuille de papier siliconé, puis étalé à l'aide d'une masse en acier, également protégée par du papier siliconé, jusqu'à la mise en forme d'une plaquette ayant pour épaisseur environ 3 mm.

La mesure est réalisée, après 3 jours correspondant à la réticulation complète de la plaquette, au moyen d'un duromètre Shore D. Ce dernier est constitué d'un appareil de forme circulaire, monté sur une semelle d'où dépasse une aiguille. Lors de la mesure, la semelle est approchée parallèlement à la surface de la plaquette réticulée, et l'aiguille est enfoncée verticalement de manière manuelle. La lecture se fait sur le cadran circulaire, sur une échelle de 10 à 100.

Le résultat est indiqué dans le tableau suivant.

### Exemples 2 à 5 :

On répète l'exemple 1 en faisant varier la teneur en Ca(OH)₂ de la composition (A) et en introduisant dans la composition(B) du CAPCURE^{®} 3-800, selon les valeurs indiquées dans le tableau. Le CAPCURE^{®} 3-800 a une teneur en groupe -SH de 3000 mmol/kg.

Les résultats sont indiqués dans le tableau.

### Exemple 6 :

On répète l'exemple 1 en remplaçant l'hydroxyde de calcium par de l'oxyde de calcium avec la quantité indiquée dans le tableau. Cet oxyde de calcium résulte de l'incorporation dans la composition (A) de 10% d'un ciment Portland comprenant environ 65 % de CaO. Les autres ingrédients du ciment Portland constituent 3,5 % de (A) et sont inclus dans les charges inertes qui sont constituées également pour 60 % de (A) par un mélange de silicate de magnésium hydraté et de carbonate de calcium en quantités sensiblement égales.

Les résultats sont également indiqués dans le tableau.

### Exemple 7 :

On répète l'exemple 1 avec les composants indiqués dans le tableau et en utilisant comme charges inertes un mélange de silicate de magnésium hydraté, de carbonate de calcium et de silice. On obtient les résultats également indiqués.

### Exemple B (comparatif) :

On répète l'exemple 1 avec les quantités d'ingrédients indiquées dans le tableau.
Les résultats sont indiqués dans le tableau.

Il apparaît ainsi que les systèmes adhésifs bicomposants époxy des exemples 1 à 7 permettent d'obtenir à sec un temps ouvert allant de 10 minutes à plusieurs heures, largement supérieur à celui de l'exemple B, tout en conduisant après réticulation à un joint adhésif de même dureté.

De plus l'incorporation d'environ 0,5% d'eau permet, au moment de leur utilisation, de ramener facilement le temps ouvert des systèmes des exemples 1 à 7 à au plus une dizaine de minutes.

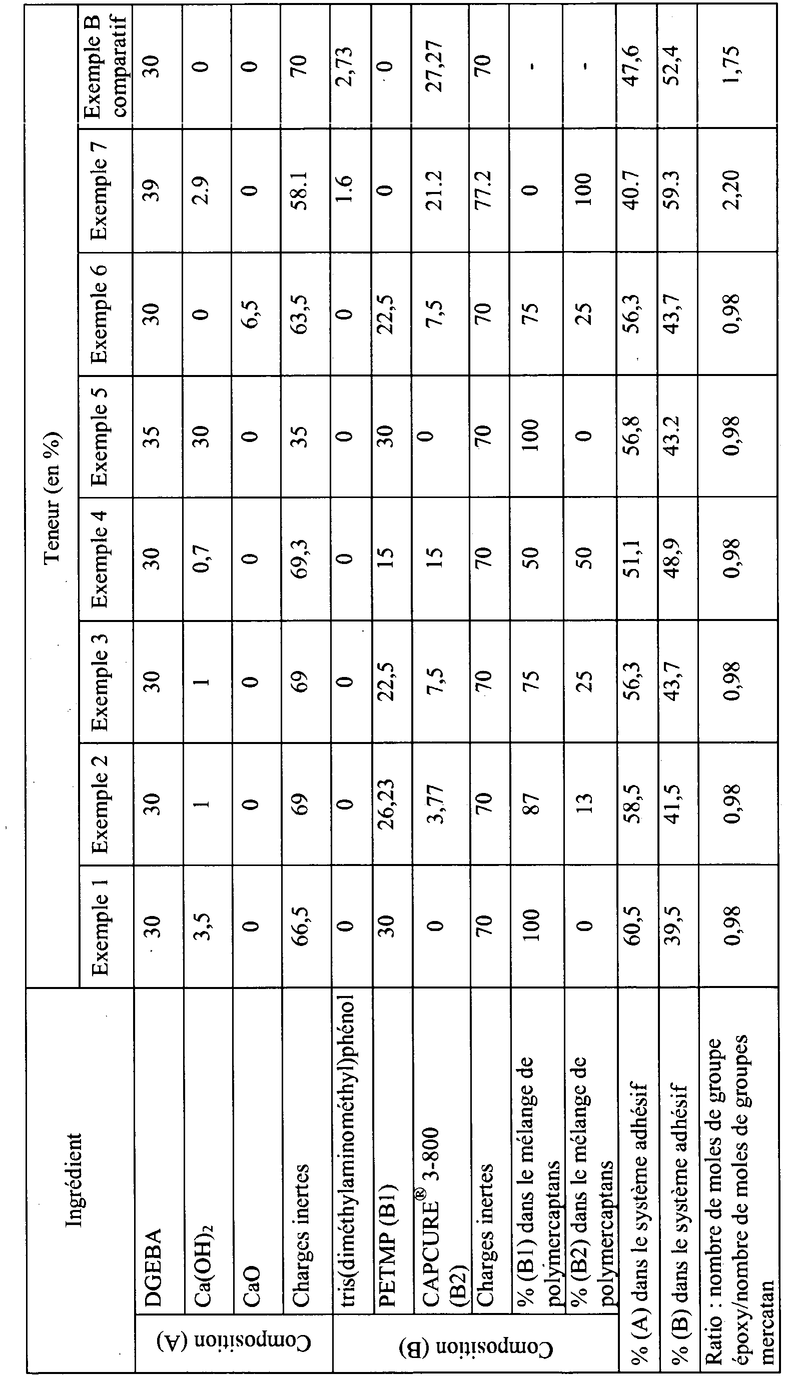

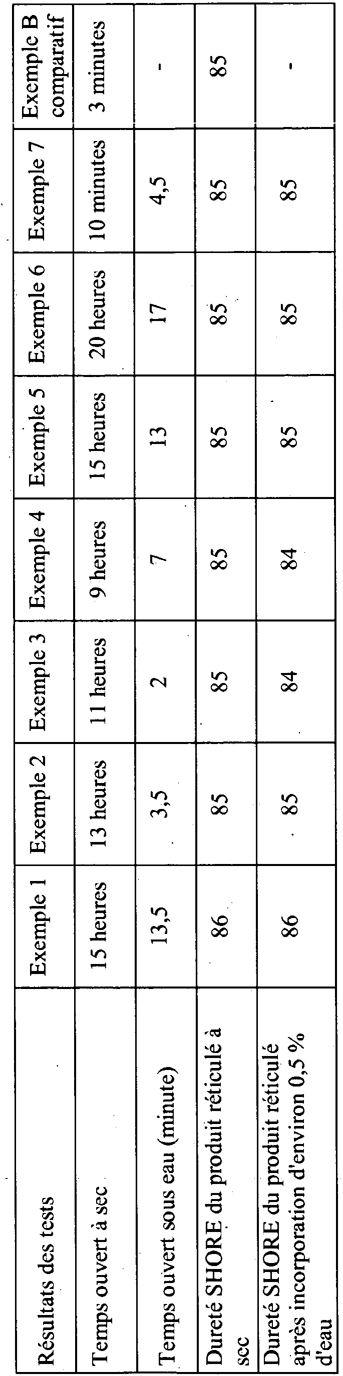

## Revendications

1. Système adhésif bicomposant époxy **caractérisé en ce qu'**il comprend :
- une composition (A) comprenant :
- de 15 à 50 % d'une résine époxy réticulable de type bisphénol A,
- de 0,5 à 40 % d'un oxyde ou hydroxyde d'un métal alcalino-terreux sous la forme de particules de taille comprise entre environ 1 et 50 µm, et
- de 30 à 80 % d'une ou plusieurs charges inertes, minérales ou organiques ; et
- une composition (B) comprenant :
- de 15 à 50 % d'un mélange de polymercaptans consistant de :
- 0 à 100 % d'un polymercaptan B1 obtenu par estérification de l'acide mercaptoacétique ou mercaptopropionique avec un polyol comprenant de 3 à 6 atomes de carbone ; et
- 0 à 100 % d'un polymercaptan B2 obtenu par action du sulfure d'hydrogène sur un polyglycidyl éther de polyoxyalkylène, et
- de 50 à 85 % d'une ou plusieurs charges inertes, minérales ou organiques ;
le rapport poids de composition (A)/ poids de composition (B) dudit système étant tel que le ratio nombre de moles de groupes époxy/nombre de moles de groupes mercaptan est compris entre 0,95 et 2,5.

2. Système selon la revendication 1, **caractérisé en ce que** la composition (A) comprend comme résine époxy réticulable le diglycidyl éther de bisphenol A (ou DGEBA), de formule :

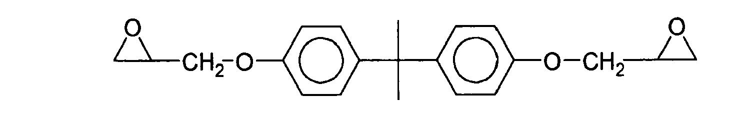

3. Système selon l'une des revendications 1 ou 2, **caractérisé en ce que** le métal alcalino-terreux dont l'oxyde ou l'hydroxyde est compris dans la composition (A) est choisi parmi le calcium, le barium et le strontium.

4. Système selon l'une des revendications 1 à 3, **caractérisé en ce que** l'oxyde ou hydroxyde de métal alcalino-terreux compris dans la composition (A) est choisi parmi l'hydroxyde de calcium ou l'oxyde de calcium.

5. Système selon l'une des revendications 1 à 4, **caractérisé en ce que** la composition (A) comprend une composition comprenant environ de 60 à 70 % d'oxyde de calcium, 15 à 25 % de silice et 2 à 10 % d'oxyde ferrique Fe₂O₃.

6. Système selon l'une des revendications 1 à 5, **caractérisé en ce que** la composition (A) comprend de 25 à 40 % de la résine époxy réticulable de type bisphénol A, de 0,5 à 35 % de l'oxyde ou hydroxyde de métal alcalino-terreux, et de 35 à 75 % de charges inertes minérales.

7. Système selon l'une des revendications 1 à 6, **caractérisé en ce que** le mélange de polymercaptans compris dans la composition (B) comprend comme composé B1 le pentaerythritol tetra(3-mercaptopropionate) et comme composé B2 un dérivé polymercaptan d'un polyglycidyl éther de polyoxypropylène.

8. Système selon l'une des revendications 1 à 7, **caractérisé en ce que** la composition (B) comprend :
- de 20 à 40 % du mélange de polymercaptans, et
- de 60 à 80 % de charges minérales.

9. Système selon l'une des revendications 1 à 8, **caractérisé en ce que** sa quantité, exprimée en poids total des compositions (A) et (B), est comprise entre 2 et 60 g, de préférence entre 5 et 50 g.

10. Système selon l'une des revendications 1 à 9, **caractérisé en ce que** les compositions (A) et (B) sont conditionnées de façon séparée, sous la forme de pâtes.

11. Système selon l'une des revendications 1 à 9, **caractérisé en ce qu'**il est conditionné en un bâtonnet ayant la forme d'un cylindre droit comprenant :
- un cylindre droit intérieur constitué de la composition (B) et
- un cylindre droit extérieur constitué de la composition (A), concentrique et au contact du cylindre intérieur.

12. Utilisation du système tel que défini dans l'une des revendications 1 à 11 comme colle de fixation ou de réparation, comprenant :
- le prélèvement d'une partie dudit système correspondant à un poids total des compositions (A) et (B) allant de 2 à 60 g, de préférence de 5 à 50 g, puis
- le malaxage manuel desdites compositions (A) et (B) jusqu'à obtention d'un mélange homogène, durant un temps allant généralement de 30 secondes à 2 minutes, puis
- l'application immédiate dudit mélange à sec sur le ou les substrats à assembler ou à réparer.

13. Utilisation du système tel que défini dans l'une des revendications 1 à 11 comme colle de fixation ou de réparation, comprenant :
- le prélèvement d'une partie dudit système correspondant à un poids total des compositions (A) et (B) allant de 2 à 60 g, de préférence de 5 à 50 g, puis
- le malaxage manuel desdites compositions (A) et (B) jusqu'à obtention d'un mélange homogène, durant un temps allant généralement de 30 secondes à 2 minutes, puis
- l'incorporation d'eau dans ledit mélange à raison d'une quantité comprise entre 0,05 et 2,5 %, de préférence entre 0,1 et 1 %, suivie d'une ré-homogénéisation, puis
- l'application immédiate du mélange obtenu sur le ou les substrats à assembler ou à réparer.

## Patentansprüche

1. Zweikomponentiges Epoxidklebstoffsystem, **dadurch gekennzeichnet, dass** es Folgendes umfasst:
eine Zusammensetzung (A), umfassend:
- 15 bis 50% eines vernetzbaren Epoxidharzes vom Bisphenol-A-Typ,
- 0,5 bis 40% eines Erdalkalimetalloxids oder
- hydroxids in Form von Teilchen mit einer Größe zwischen ungefähr 1 und 50 µm und
- 30 bis 80% eines oder mehrerer anorganischer oder organischer inerter Füllstoffe; und
- eine Zusammensetzung (B), umfassend:
- 15 bis 50% einer Mischung von Polymercaptanen, bestehend aus:
- 0 bis 100% eines durch Veresterung von Mercaptoessigsäure oder Mercaptopropionsäure mit einem Polyolen mit 3 bis 6 Kohlenstoffatomen erhaltenen Polymercaptans B1 und
- 0 bis 100% eines durch Einwirkung von Schwefelwasserstoff auf einen Polyoxyalkylenpolyglycidylether erhaltenen Polymercaptans B2, und
- 50 bis 85% eines oder mehrerer anorganischer oder organischer inerter Füllstoffe;
wobei das Verhältnis von Gewicht der Zusammensetzung (A) zu Gewicht der Zusammensetzung (B) des Systems so beschaffen ist, dass das Verhältnis von Molzahl der Epoxidgruppen zur Molzahl der Mercaptangruppen zwischen 0,95 und 2,5 liegt.

2. System nach Anspruch 1, **dadurch gekennzeichnet, dass** die Zusammensetzung (A) als vernetzbares Epoxidharz Bisphenol-A-diglycidylether (oder BADGE) der Formel: 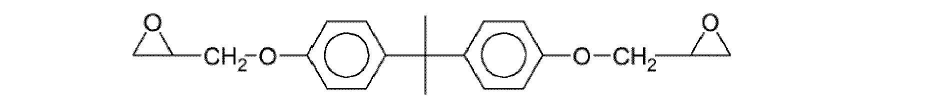 umfasst.

3. System nach einem der Ansprüche 1 oder 2, **dadurch gekennzeichnet, dass** das Erdalkalimetalloxid oder -hydroxid in der Zusammensetzung (A) aus Calcium, Barium und Strontium ausgewählt ist.

4. System nach einem der Ansprüche 1 bis 3, **dadurch gekennzeichnet, dass** das Erdalkalimetalloxid oder -hydroxid in der Zusammensetzung (A) aus Calciumhydroxid und Calciumoxid ausgewählt ist.

5. System nach einem der Ansprüche 1 bis 4, **dadurch gekennzeichnet, dass** die Zusammensetzung (A) eine ungefähr 60 bis 70% Calciumoxid, 15 bis 25% Siliciumdioxid und 2 bis 10% Eisen (III) -oxid Fe₂O₃ umfassende Zusammensetzung umfasst.

6. System nach einem der Ansprüche 1 bis 5, **dadurch gekennzeichnet, dass** die Zusammensetzung (A) 25 bis 40% vernetzbares Epoxidharz vom Bisphenol-A-Typ, 0,5 bis 35% Erdalkalimetalloxid oder -hydroxid und 35 bis 75% anorganische inerte Füllstoffe umfasst.

7. System nach einem der Ansprüche 1 bis 6, **dadurch gekennzeichnet, dass** die Mischung von Polymercaptanen in der Zusammensetzung (B) als Verbindung B1 Pentaerythrittetra(3-mercaptopropionat) und als Verbindung B2 ein Polymercaptanderivat eines Polyoxypropylenpolyglycidylethers umfasst.

8. System nach einem der Ansprüche 1 bis 7, **dadurch gekennzeichnet, dass** die Zusammensetzung (B) - 20 bis 40% der Mischung von Polymercaptanen und - 60 bis 80% anorganische Füllstoffe umfasst.

9. System nach einem der Ansprüche 1 bis 8, **dadurch gekennzeichnet, dass** seine Menge, ausgedrückt als Gesamtgewicht der Zusammensetzungen (A) und (B), zwischen 2 und 60 g und vorzugsweise zwischen 5 und 50 g liegt.

10. System nach einem der Ansprüche 1 bis 9, **dadurch gekennzeichnet, dass** die Zusammensetzungen (A) und (B) in Form von Pasten separat verpackt sind.

11. System nach einem der Ansprüche 1 bis 9, **dadurch gekennzeichnet, dass** es in Form eines Stäbchens in Form eines geraden Zylinders, umfassend:
- einen inneren geraden Zylinder, der aus der Zusammensetzung (B) besteht, und
- einen äußeren geraden Zylinder, der aus der Zusammensetzung (A) besteht, konzentrisch ist und mit dem inneren Zylinder in Kontakt steht, verpackt ist.

12. Verwendung des Systems gemäß einem der Ansprüche 1 bis 11 als die Fixier- oder Reparaturkleber, umfassend:
- das Abnehmen eines Teils des Systems, der einem Gesamtgewicht der Zusammensetzungen (A) und (B) im Bereich von 2 bis 60 g und vorzugsweise 5 bis 50 g entspricht, dann
- das manuelle Kneten der Zusammensetzungen (A) und (B) bis zum Erhalt einer homogenen Mischung über einen Zeitraum, der im Allgemeinen 30 Sekunden bis 2 Minuten beträgt, dann
- das sofortige Aufbringen der Mischung in trockenem Zustand auf das oder die zusammenzufügenden oder zu reparierenden Substrate.

13. Verwendung des Systems gemäß einem der Ansprüche 1 bis 11 als die Fixier- oder Reparaturkleber, umfassend:
- das Abnehmen eines Teils des Systems, der einem Gesamtgewicht der Zusammensetzungen (A) und (B) im Bereich von 2 bis 60 g und vorzugsweise 5 bis 50 g entspricht, dann
- das manuelle Kneten der Zusammensetzungen (A) und (B) bis zum Erhalt einer homogenen Mischung über einen Zeitraum, der im Allgemeinen 30 Sekunden bis 2 Minuten beträgt, dann
- das Einarbeiten von Wasser in die Mischung in einer Menge zwischen 0,05 und 2,5%, vorzugsweise zwischen 0,1 und 1%, und anschließendes Rehomogenisieren, dann
- das sofortige Aufbringen der Mischung in trockenem Zustand auf das oder die zusammenzufügenden oder zu reparierenden Substrate.

## Claims

1. Two part epoxy adhesive system, **characterized in that** it comprises:
- a composition (A) comprising:
- from 15% to 50% of a crosslinkable epoxy resin of bisphenol A type,
- from 0.5% to 40% of an alkaline earth metal oxide or hydroxide in the form of particles having a size of between approximately 1 and 50 µm, and
- from 30% to 80% of one or more inorganic or organic inert fillers; and
- a composition (B) comprising:
- from 15% to 50% of a mixture of polymercaptans consisting of:
- 0 to 100% of a polymercaptan B1 obtained by esterification of mercaptoacetic or mercaptopropionic acid with a polyol comprising from 3 to 6 carbon atoms; and
- from 0 to 100% of a polymercaptan B2 obtained by reacting hydrogen sulphide with a polyoxyalkylene polyglycidyl ether, and
- from 50% to 85% of one or more inorganic or organic inert fillers;
the weight of composition (A)/weight of composition (B) ratio of said system being such that the ratio of number of moles of epoxy groups/number of moles of mercaptan groups is between 0.95 and 2.5.

2. System according to Claim 1, **characterized in that** the composition (A) comprises, as crosslinkable epoxy resin, bisphenol A diglycidyl ether (or BADGE), of formula:

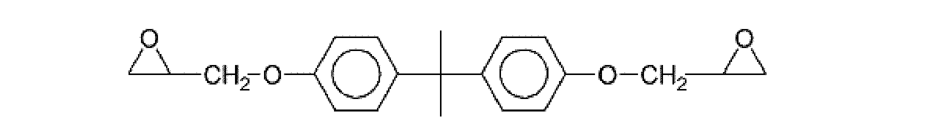

3. System according to either of Claims 1 and 2, **characterized in that** the alkaline earth metal of which the oxide or the hydroxide is included in the composition (A) is chosen from calcium, barium and strontium.

4. System according to one of Claims 1 to 3, **characterized in that** the alkaline earth metal oxide or hydroxide included in the composition (A) is chosen from calcium hydroxide or calcium oxide.

5. System according to one of Claims 1 to 4, **characterized in that** the composition (A) comprises a composition comprising approximately from 60% to 70% of calcium oxide, 15% to 25% of silica and 2% to 10% of ferric oxide Fe₂O₃.

6. System according to one of Claims 1 to 5, **characterized in that** the composition (A) comprises from 25% to 40% of the crosslinkable epoxy resin of bisphenol A type, from 0.5% to 35% of the alkaline earth metal oxide or hydroxide, and from 35% to 75% of inorganic inert fillers.

7. System according to one of Claims 1 to 6, **characterized in that** the mixture of polymercaptans included in the composition (B) comprises, as compound B1, pentaerythritol tetra(3-mercaptopropionate) and, as compound B2, a polymercaptan derivative of a polyoxypropylene polyglycidyl ether.

8. System according to one of Claims 1 to 7, **characterized in that** the composition (B) comprises:
- from 20% to 40% of the mixture of polymercaptans, and
- from 60% to 80% of inorganic fillers.

9. System according to one of Claims 1 to 8, **characterized in that** the amount thereof, expressed as total weight of the compositions (A) and (B), is between 2 and 60 g, preferably between 5 and 50 g.

10. System according to one of Claims 1 to 9, **characterized in that** the compositions (A) and (B) are packaged separately, in the form of pastes.

11. System according to one of Claims 1 to 9, **characterized in that** it is packaged as a stick having the shape of a right cylinder comprising:
- an internal right cylinder consisting of the composition (B) and
- an external right cylinder consisting of the composition (A), which is concentric and in contact with the internal cylinder.

12. Use of the system as defined in one of Claims 1 to 11, as a fastening or repair adhesive, comprising:
- the sampling of a part of said system corresponding to a total weight of the compositions (A) and (B) ranging from 2 to 60 g, preferably from 5 to 50 g, then
- the manual kneading of said compositions (A) and (B) until a homogeneous mixture is obtained, for a period of time generally ranging from 30 seconds to 2 minutes, then
- the immediate application of said mixture dry to the substrate(s) to be assembled or to be repaired.

13. Use of the system as defined in one of Claims 1 to 11, as a fastening or repair adhesive, comprising:
- the sampling of a part of said system corresponding to a total weight of the compositions (A) and (B) ranging from 2 to 60 g, preferably from 5 to 50 g, then
- the manual kneading of said compositions (A) and (B) until a homogeneous mixture is obtained, for a period of time generally ranging from 30 seconds to 2 minutes, then
- the incorporation of water into said mixture at an amount of between 0.05% and 2.5%, preferably between 0.1% and 1%, followed by re-homogenization, then
- the immediate application of the mixture obtained to the substrate(s) to be assembled or to be repaired.
